# EUROPÄISCHE PATENTSCHRIFT

(11) **EP 2 474 766 B1**
(45) Veröffentlichungstag und Bekanntmachung des Hinweises auf die Patenterteilung: **02.12.2015**
(21) Anmeldenummer: 11150642.4
(22) Anmeldetag: 11.01.2011
(51) Int. Cl.: F16B 2/24, F16B 15/00, F24D 3/14, F16L 3/04, F16B 21/08

(54) **Rohrhalter zur Befestigung eines Heizrohres und/oder Kühlrohres und Heiz- und/oder Kühlanordnung**
Tube holder for fixing a heating pipe and/or cooling pipe and heating and/or cooling assembly
Support de tuyau destiné à la fixation d'un tuyau de chauffage et/ou d'un tuyau de refroidissement et agencement de chauffage et/ou de refroidissement

(43) Veröffentlichungstag der Anmeldung: 11.07.2012
(73) Patentinhaber: Roth Werke GmbH, 35232 Dautphetal (DE)
(72) Erfinder:
(74) Vertreter: Rohmann, Michael

(56) Entgegenhaltungen:
- EP-A1- 1 855 062
- DE-A1- 4 005 659
- DE-A1- 19 607 516
- DE-A1- 19 756 764
- DE-A1-102009 009 400
- DE-C1- 19 809 587
- US-A- 5 393 185

## Beschreibung

Die Erfindung bezieht sich auf einen Rohrhalter zur Befestigung eines Heizrohres und/oder eines Kühlrohres auf einer Dämmschicht, wobei der Rohrhalter U-förmig bzw. im Wesentlichen U-förmig ausgebildet ist und eine U-Basis sowie zwei daran angeschlossene U-Schenkel aufweist, wobei an jedem U-Schenkel zumindest ein Widerhaken für die Verankerung des Rohrhalters in der Dämmschicht angeschlossen ist. Die Erfindung bezieht sich weiterhin auf eine Heiz- und/oder Kühlanordnung mit einer Dämmschicht, zumindest einem auf der Dämmschicht verlegten Rohr und mit Rohrhaltern, mit denen das Rohr an der Dämmschicht fixiert ist. Statt des Begriffes Heizrohr und/oder Kühlrohr wird hier und nachfolgend auch kurz der Begriff Rohr benutzt.

U-förmige Rohrhalter werden insbesondere bei der Verlegung von Heizrohren von Fußbodenheizungen in größeren Stückzahlen eingesetzt, um die Heizrohre auf der Dämmschicht zu befestigen. Die Rohrhalter werden in der Regel mit Setzvorrichtungen, die auf das zu verlegende Heizrohr aufgesetzt werden, in die Dämmschicht eingestoßen. Nach dem Befestigen der Rohre bzw. Heizrohre auf der Dämmschicht wird eine Vergussmasse, insbesondere eine Estrichschicht aufgebracht, und die Heizrohre werden in die Vergussmasse bzw. in den Estrich eingebettet.

Rohrhalter der vorstehend beschriebenen Art sind aus der Praxis in verschiedenen Ausführungsformen bekannt (siehe z.B. DE 10 2009 009 400 A1). Viele dieser bekannten Rohrhalter sind nach der Verankerung in einer Dämmschicht nicht sehr resistent gegenüber mechanischen Beanspruchungen. Es sind oftmals lediglich geringe Auszugskräfte zum Herausziehen der Rohrhalter aus der Dämmschicht erforderlich. Bei dem Einbringen bzw. Einstoßen vieler bekannter Rohrhalter wird im Übrigen die Dämmschicht in unerwünschter Weise in Mitleidenschaft gezogen bzw. beschädigt. Häufig bilden sich dabei Öffnungen bzw. Löcher, durch die der aufzubringende Estrich in die Dämmschicht eindringen kann. Dadurch bilden sich unter anderem unerwünschte Schallbrücken.

Der Erfindung liegt das technische Problem zugrunde, Rohrhalter anzugeben, bei denen die vorstehend aufgeführten Nachteile effektiv vermieden werden können. Der Erfindung liegt fernerhin das technische Problem zugrunde, eine entsprechende Heiz- und/oder Kühlanordnung anzugeben.

Zur Lösung des technischen Problems lehrt die Erfindung einen Rohrhalter der eingangs genannten Art, der dadurch gekennzeichnet ist, dass zumindest aus der dämmschichtseitigen Oberfläche des an jedem U-Schenkel angeschlossenen unteren Widerhakens zumindest eine Schneidkante vorkragt. Die unteren Widerhaken sind dabei die Widerhaken eines Rohrhalters, die beim Fixieren des Rohrhalters zuerst in die Dämmschicht eingestoßen werden. Soweit hier und nachfolgend die Begriffe unten und oben benutzt werden, ist damit die Orientierung eines Rohrhalters gemeint, bei der die Enden der beiden U-Schenkel der Dämmschicht zugewandt sind und somit nach unten weisen.

Es ist möglich, dass an dem unteren Ende jedes U-Schenkels lediglich ein Widerhaken angeschlossen ist. Dann bilden diese beiden einzigen Widerhaken die unteren Widerhaken des Rohrhalters. An jedem U-Schenkel können nach einer Ausführungsform der Erfindung auch zwei übereinander angeordnete Widerhaken angeschlossen sein. Dann sind die am unteren Ende der U-Schenkel angeordneten und zuerst in die Dämmschicht einzustoßenden Widerhaken die genannten unteren Widerhaken. Erfindungsgemäß ist an jedem der unteren Widerhaken zumindest eine Schneidkante vorgesehen, die aus der dämmschichtseitigen Oberfläche der Widerhaken vorkragt.

Es liegt im Rahmen der Erfindung, dass die erfindungsgemäßen Rohrhalter aus Kunststoff bzw. im Wesentlichen aus Kunststoff bestehen. Vorzugsweise werden die Rohrhalter als Spritzgussteile gefertigt. Es liegt weiter im Rahmen der Erfindung dass die Widerhaken einstückig mit den U-Schenkeln ausgebildet sind bzw. einstückig an die U-Schenkel angeformt sind.

Die erfindungsgemäßen Rohrhalter werden zweckmäßigerweise mit einer Setzvorrichtung an der Dämmschicht befestigt bzw. in die Dämmschicht eingestoßen. Solche Setzvorrichtungen sind an sich bekannt. Vorzugsweise weisen die Rohrhalter Manipulationselemente auf, an denen die Setzvorrichtungen zum Einbringen der Rohrhalter in die Dämmschicht angreifen können. Es liegt dabei im Rahmen der Erfindung, dass die Manipulationselemente an den Außenseiten der U-Schenkel angeschlossen sind bzw. einstückig angeformt sind.

Die Dämmschicht besteht vorzugsweise aus einer Unterschicht und aus einer auf der Unterschicht aufliegenden Auflageschicht. Die Auflageschicht ist dabei zweckmäßigerweise dünner bzw. deutlich dünner ausgebildet als die Unterschicht. Nach besonders bevorzugter, weiter unten noch beschriebener Ausführungsform weist die Auflageschicht einen Vliesstoff bzw. einen elastischen Vliesstoff auf. Beim Einbringen eines Rohrhalters in die Dämmschicht werden die an die U-Schenkel angeschlossenen Widerhaken in die Dämmschicht eingestoßen bzw. eingedrückt und vorzugsweise hintergreifen die Widerhaken im befestigten Zustand eines Rohrhalters die Auflageschicht.

Es liegt im Rahmen der Erfindung, dass ein Widerhaken zumindest ein Widerhakenelement aufweist. Grundsätzlich liegt es im Rahmen der Erfindung, dass ein unterer Widerhaken aus lediglich zumindest einem von dem unteren Ende des ihm zugeordneten U-Schenkels in Bezug auf die Ausrichtung des U-Schenkels schräg nach oben ragenden Widerhakenelement gebildet wird. - Nach sehr bevorzugter Ausführungsform der Erfindung sind die bzw. sind die beiden an den U-Schenkeln angeschlossenen unteren Widerhaken V-förmig ausgebildet. Vorzugsweise ist dabei ein den einen V-Schenkel eines Widerhakens bildendes Widerhakenelement auf der einen Seite des zugeordneten U-Schenkels angeordnet und ein den anderen V-Schenkel eines Widerhakens bildendes Widerhakenelement ist auf der anderen Seite des zugeordneten U-Schenkels angeordnet. Es liegt im Rahmen der Erfindung, dass die Widerhakenelemente bzw. V-Schenkel in Bezug auf die Ausrichtung des zugeordneten U-Schenkels schräg nach oben ragen. Vorzugsweise ist jeder U-Schenkel zentralmittig mit zwischen beiden zugeordneten Widerhakenelementen bzw. V-Schenkeln angeordnet.

Es empfiehlt sich, dass der Öffnungswinkel bzw. der Winkel α zwischen den Widerhakenelementen bzw. zwischen den V-Schenkeln eines Widerhakens 40° bis 80° und bevorzugt 50° bis 70° beträgt. Es liegt im Rahmen der Erfindung, dass oberhalb der an den unteren Enden der U-Schenkel angeschlossenen unteren Widerhaken weitere Widerhaken vorgesehen sind bzw. an den U-Schenkeln angeschlossen sind. Vorzugsweise ist oberhalb jedes unteren Widerhakens zumindest ein, bevorzugt ein weiterer Widerhaken, vorgesehen bzw. an den zugeordneten U-Schenkel angeschlossen. Zweckmäßigerweise sind auch diese weiteren Widerhaken V-förmig ausgebildet und empfohlenermaßen entspricht der Öffnungswinkel bzw. der Winkel α zwischen den Widerhakenelementen bzw. zwischen den V-Schenkeln dieser weiteren Widerhaken dem Öffnungswinkel bzw. dem Winkel α der unteren Widerhaken. Es hat sich bewährt, dass der Winkel zwischen einem Widerhakenelement bzw. einem V-Schenkel und dem zugeordneten U-Schenkel 20° bis 40°, bevorzugt 25° bis 35° beträgt.

Es liegt im Rahmen der Erfindung, dass an jedem Widerhakenelement der an den U-Schenkeln angeschlossenen unteren Widerhaken zumindest eine Schneidkante angeordnet bzw. angeschlossen ist. Besonders bevorzugt ist lediglich eine Schneidkante an jedem dieser Widerhakenelemente angeschlossen. Die vorzugweise V-förmigen Widerhaken weisen dann empfohlenermaßen zwei diametral gegenüberliegende Schneidkanten auf. Wenn zwei V-förmige untere Widerhaken vorgesehen sind, ergeben sich somit vier Widerhakenelemente und vier Schneidkanten an den Widerhaken bzw. an den Widerhakenelementen.

Die Schneidkante erstreckt sich vom unteren Ende des zugeordneten Widerhakens bzw. vom unteren Ende des zugeordneten U-Schenkels über ein Widerhakenelement nach oben hin. Es liegt im Übrigen im Rahmen der Erfindung, dass die Schneidkante bzw. die Schneidkanten einstückig an die Widerhaken bzw. an die Widerhakenelemente angeformt sind. Zweckmäßigerweise ist eine Schneidkante zumindest in dem in Bezug auf die Länge I eines Widerhakenelementes unteren Drittel bevorzugt in der unteren Hälfte des Widerhakenelementes angeordnet. Die Länge I eines Widerhakenelementes wird dabei von dem Anschlusspunkt bzw. Anschlussbereich des Widerhakenelementes an dem U-Schenkel bis zu dem oberen Ende des Widerhakenelementes gemessen. Empfohlenermaßen erstreckt sich eine Schneidkante vom unteren Ende des Widerhakens über 40 bis 80 %, bevorzugt über 45 bis 75 % der Länge I eines Widerhakenelementes nach oben hin. Es hat sich bewährt, dass die Länge einer Schneidkante 2 bis 10 mm, bevorzugt 3 bis 8 mm und insbesondere 4 bis 8 mm beträgt.

Nach bevorzugter Ausführungsform der Erfindung ist eine Schneidkante mittig bzw. zentralmittig auf der dämmschichtseitigen Oberfläche eines Widerhakenelementes angeordnet. Es liegt im Rahmen der Erfindung, dass sich eine Schneidkante in der Mitte eines Widerhakenelementes vom unteren Ende des Widerhakens aus nach oben hin erstreckt. Eine Schneidkante ragt mit einer Höhe h aus der zugeordneten dämmschichtseitigen Oberfläche des Widerhakens bzw. des Widerhakenelementes hervor. Empfohlenermaßen beträgt diese Höhe h 0,2 bis 1,4 mm, bevorzugt 0,25 bis 1,2 mm und sehr bevorzugt 0,3 bis 1 mm. Nach einer Ausführungsvariante der Erfindung kann eine Schneidkante im Querschnitt dreieckförmig ausgebildet sein bzw. etwa dreieckförmig ausgebildet sein. Zweckmäßigerweise läuft eine Schneidkante von der dämmschichtseitigen Oberfläche eines Widerhakens bzw. eines Widerhakenelementes in Richtung Dämmschicht spitz zu bzw. im Wesentlichen spitz zu.

Gemäß einer empfohlenen Ausführungsform der Erfindung verjüngt sich die dämmschichtseitige Oberfläche eines Widerhakens bzw. eines Widerhakenelementes zum unteren Ende des Widerhakens bzw. zum unteren Ende des zugeordneten U-Schenkels hin. Vorzugsweise läuft die dämmschichtseitige Oberfläche nach unten hin spitz zu. - Es liegt auch im Rahmen der Erfindung, dass die U-Schenkel an ihrem unten Ende bzw. im Bereich der unteren Wider-haken nach unten hin bzw. zur Dämmschicht hin spitz zulaufen.

Es empfiehlt sich, dass die Widerhaken bzw. die Widerhakenelemente an den seitlichen Oberflächen bzw. an den beiden seitlichen Oberflächen eines U-Schenkels angeschlossen sind. Diese seitlichen Oberflächen sind dann an der Innenseite und an der Außenseite des U angeordnet. Zweckmäßigerweise weist jeder U-Schenkel eine vorderseitige Oberfläche und eine rückseitige Oberfläche auf, wobei die vorderseitige Oberfläche und die rückseitige Oberfläche quer bzw. senkrecht bzw. im Wesentlichen senkrecht zu den beiden seitlichen Oberflächen des U-Schenkels angeordnet sind.

Eine besonders bevorzugte Ausführungsform der Erfindung ist dadurch gekennzeichnet, dass an dem unteren Ende jedes U-Schenkels aus der vorderseitigen Oberfläche des U-Schenkels und aus der rückseitigen Oberfläche des U-Schenkels jeweils zumindest eine Schneidkante vorkragt. Es empfiehlt sich, dass sowohl an der vorderseitigen Oberfläche eines U-Schenkels als auch an der rückseitigen Oberfläche des U-Schenkels eine Schneidkante bzw. lediglich eine Schneidkante vorhanden ist. Zweckmäßigerweise sind die beiden Schneidkanten eines U-Schenkels diametral gegenüberliegend angeordnet. Es liegt im Rahmen der Erfindung, dass die genannten Schneidkanten einstückig an die U-Schenkel angeformt sind.

Es liegt weiterhin im Rahmen der Erfindung, dass sich die Schneidkante an der vorderseitigen Oberfläche eines U-Schenkels und die Schneidkante an der rückseitigen Oberfläche des U-Schenkels vom unteren Ende des U-Schenkels nach oben hin erstrecken. Dabei hat es sich bewährt, dass die Länge dieser Schneidkanten der Länge der Schneidkanten an den Widerhaken bzw. in etwa der Länge der Schneidkanten an den Widerhaken entspricht. Auch die Höhe h der Schneidkanten an der vorderseitigen und der rückseitigen Oberfläche eines U-Schenkels entspricht bzw. entspricht in etwa der Höhe h der Schneidkanten an den Widerhaken. Zweckmäßigerweise verlaufen die Schneidkanten an der vorderseitigen und an der rückseitigen Oberfläche eines U-Schenkels parallel zu dem U-Schenkel und bevorzugt sind diese Schneidkanten zentralmittig auf der vorderseitigen bzw. auf der rückseitigen Oberfläche des U-Schenkels angeordnet.

Zur Lösung des technischen Problems lehrt die Erfindung auch eine Heiz- und/oder Kühlanordnung mit einer Dämmschicht, zumindest einem auf der Dämmschicht verlegten Rohr und mit erfindungsgemäßen Rohrhaltern, mit denen das Rohr an der Dämmschicht fixiert ist. Die Dämmschicht weist eine obere Auflageschicht aus einem elastischen Werkstoff, insbesondere aus einem elastischen Vliesstoff auf. Empfohlenermaßen weist die Dämmschicht eine Unterschicht und die darauf angeordnete Auflageschicht aus dem elastischen Werkstoff bzw. aus dem elastischen Vliesstoff auf. Die Auflageschicht ist dabei zweckmäßigerweise dünner bzw. deutlich dünner als die Unterschicht.

Eine sehr bevorzugte Ausführungsform der Erfindung ist dadurch gekennzeichnet, dass die Auflageschicht mit der Maßgabe ausgebildet ist, dass sich die elastische Auflageschicht - insbesondere der elastische Vliesstoff - nach dem Eindringen der Widerhaken der Rohrhalter in die Dämmschicht im Zuge der Befestigung eines Rohrhalters im Bereich der mit den Widerhaken erzeugten Einstichöffnungen wieder zusammenzieht, so dass die Einstichöffnungen teilweise bzw. bereichsweise wieder verschlossen werden. Die Widerhaken durchdringen also zunächst die Auflageschicht unter Ausbildung größerer Einstichöffnungen und nach Passieren der Widerhaken zieht sich der elastische Werkstoff bzw. Vliesstoff im Bereich der Einstichöffnungen unter Einwirkung elastischer Rückstellkräfte wieder zusammen, so dass die Einstichöffnungen teilweise bzw. bereichsweise wieder verschlossen werden. Teilweise bzw. bereichsweise verschließen meint dabei insbesondere, dass der Werkstoff bzw. Vliesstoff nach dem Zusammenziehen zumindest teilweise bzw. bereichsweise oberhalb der Widerhaken an den U-Schenkeln des Rohrhalters anliegt. Es liegt im Rahmen der Erfindung, dass die in die Dämmschicht bzw. in die Unterschicht eingebrachten Widerhaken den elastischen Werkstoff bzw. den elastischen Vliesstoff hintergreifen und so den Rohrhalter vor dem Herausziehen sichern. Zweckmäßigerweise ist der die Auflageschicht bildende Werkstoff bzw. Vliesstoff mit einer dünnen Polymerschicht oder mit einer dünnen Lackschicht versiegelt.

Der Erfindung liegt die Erkenntnis zugrunde, dass die erfindungsgemäßen Rohrhalter mit den erfindungsgemäßen Schneidkanten sehr präzise und funktionssicher in die Dämmschicht eingebracht werden können und dass dabei die Beschädigung der Dämmschicht und der Auflageschicht im Vergleich zu aus dem Stand der Technik bekannten Rohrhaltern beachtlich reduziert wird. Mittels der erfindungsgemäßen Schneidkanten können präzise verhältnismäßig kleine Öffnungen in die Dämmschicht bzw. in die Auflageschicht eingeschnitten werden. Dadurch wird auch verhindert, dass Estrich in die Dämmschicht eindringt und insbesondere störende Schallbrücken erzeugt werden. Durch das Vorsehen von Schneidkanten an den Widerhaken werden die Widerhaken im Übrigen zusätzlich stabilisiert, so dass sich die erfindungsgemäßen Rohrhalter durch überraschend geringe Auszugskräfte auszeichnen. Aufgrund der Stabilisierung durch die Schneidkanten können grundsätzlich die übrigen Bereiche des Widerhakens dünner und flexibler ausgestaltet werden. Auch dadurch wird eine Beschädigung der Dämmschicht beim Einstoßen der Rohrhalter deutlich reduziert. Aufgrund der dünneren bzw. flexibleren Ausgestaltung der Widerhaken können sich die Widerhakenelemente beim Einstoßen in die Dämmschicht einfacher an den zugeordneten U-Schenkel anlegen, so dass dadurch die Größe der Einstichöffnung reduziert werden kann. - Besondere Bedeutung kommt im Rahmen der Erfindung auch der erfindungsgemäßen Heiz- und/oder Kühlanordnung zu. Mit der Auflageschicht aus einem elastischen Werkstoff bzw. Vliesstoff werden in vorteilhafter Weise größere Öffnungen vermieden, durch die Estrich in die Dämmschicht eindringen könnte. Durch die Kombination der erfindungsgemäßen Rohrhalter mit der Dämmschicht mit einem elastischen Werkstoff als Auflageschicht wird eine sehr stabile und sichere Befestigung der Rohrhalter in der Dämmschicht erreicht. Hervorzuheben ist weiterhin, dass die erfindungsgemäßen Vorteile mit verhältnismäßig einfachen und kostengünstigen Maßnahmen erzielt werden. Nachfolgend wird die Erfindung anhand einer lediglich ein Ausführungsbeispiel darstellenden Zeichnung näher erläutert. Es zeigen in schematischer Darstellung:
- Fig. 1: eine perspektivische Ansicht des erfindungsgemäßen Rohrhalters,
- Fig. 2: eine Frontansicht des Gegenstandes nach Fig. 1 beim Aufbringen auf ein Rohr,
- Fig. 3: den Gegenstand nach Fig. 2 mit aufgenommenem Rohr,

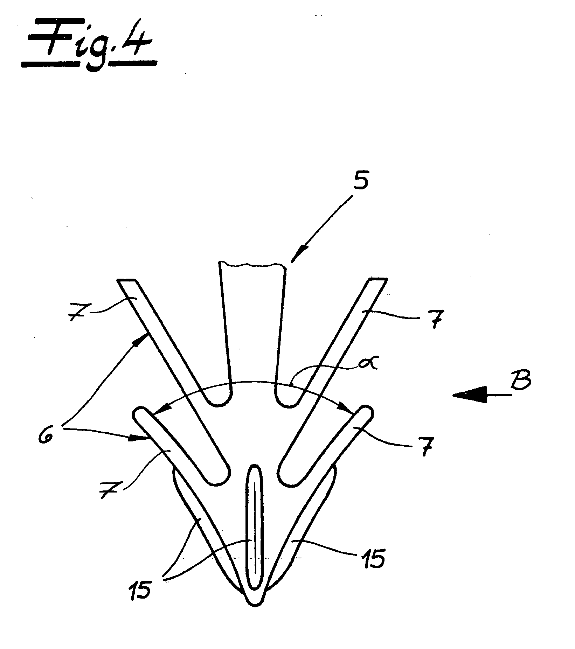

- Fig. 4: einen vergrößerten Ausschnitt A aus der Fig. 2,
- Fig. 5: den Gegenstand aus Fig. 4 aus Richtung des Pfeiles B und
- Fig. 6: den unteren Bereich eines U-Schenkels eines erfindungsgemäßen Rohrhalters bei Beaufschlagung mit einer Auszugskraft F.

Die Figuren zeigen einen Rohrhalter 1 zur Befestigung eines Heizrohres und/oder Kühlrohres (nachfolgend kurz Rohr 2) auf einer Dämmschicht 3. Der Rohrhalter 1 ist U-förmig ausgebildet und weist eine U-Basis 4 sowie zwei daran angeschlossene U-Schenkel 5 auf. Die U-Basis 4 ist vorzugsweise und im Ausführungsbeispiel bogenförmig und insbesondere halbkreisförmig bzw. in etwa halbkreisförmig ausgebildet. An das Ende jedes U-Schenkels 5 sind bevorzugt und im Ausführungsbeispiel zwei untere Widerhaken 6 einstückig angeformt und jeder Widerhaken 6 ist empfohlenermaßen und im Ausführungsbeispiel V-förmig ausgebildet. Dabei weist jeder Widerhaken 6 zwei schräg zur Längsachse des zugeordneten U-Schenkels 5 angeordnete Widerhakenelemente 7 auf, die jeweils schräg in Bezug auf die Ausrichtung des U-Schenkels 5 nach oben ragen. Die Widerhakenelemente 7 sind dabei an gegenüberliegenden Seiten des U-Schenkels 5 vorgesehen und jeder U-Schenkel ist zentralmittig zwischen den beiden zugeordneten Widerhakenelementen 7 angeordnet. Die Widerhaken 6 dienen in an sich bekannter Weise der Verankerung des Rohrhalters 1 in der Dämmschicht 3. Der Winkel α zwischen den beiden Widerhakenelementen 7 eines Widerhakens 6 beträgt im Ausführungsbeispiel etwa 60°. Vorzugsweise und im Ausführungsbeispiel sind oberhalb der unteren Widerhaken 6 zwei obere Widerhaken 6 angeordnet und an die U-Schenkel 5 angeschlossen, wobei diese oberen Widerhaken 6 bevorzugt und im Ausführungsbeispiel ebenfalls V-förmig ausgebildet sind. Dabei sind die Widerhakenelemente 7 der oberen Widerhaken 6 parallel bzw. in etwa parallel zu den Widerhakenelementen 7 der unteren Widerhaken 6 angeordnet.

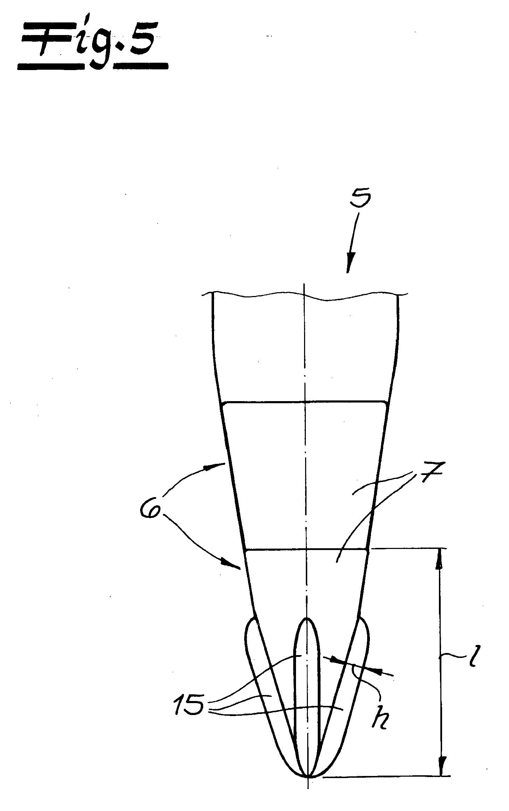

Vorzugsweise und im Ausführungsbeispiel ist an jedem Widerhakenelement 7 der beiden unteren Widerhaken 6 eine Schneidkante 15 vorgesehen, die jeweils aus der dämmschichtseitigen Oberfläche der Widerhakenelemente 7 vorkragt. Es sind also insgesamt vier Schneidkanten 15 an den Widerhakenelementen 7 der unteren Widerhaken 6 vorhanden. Dabei liegen die beiden Schneidkanten 15 eines Widerhakens 6 diametral gegenüber. Vorzugsweise und im Ausführungsbeispiel erstreckt sich jede Schneidkante 15 vom unteren Ende des Widerhakens 6 bzw. vom unteren Ende des zugeordneten U-Schenkels 5 über das zugeordnete Widerhakenelement 7 nach oben hin. Bevorzugt und im Ausführungsbeispiel erstreckt sich dabei eine Schneidkante 15 über mehr als 50 % der Länge I eines Widerhakenelementes 7. Empfohlenermaßen und im Ausführungsbeispiel ist eine Schneidkante 15 mittig bzw. zentralmittig auf der dämmschichtseitigen Oberfläche eines Widerhakenelementes 7 angeordnet. Die Schneidkante 15 erstreckt sich also in der Mitte eines Widerhakenelementes 7 vom unteren Ende des Widerhakens 6 nach oben hin. Die Höhe h einer Schneidkante 15 mag im Ausführungsbeispiel etwa 0,5 mm betragen. Bevorzugt und im Ausführungsbeispiel verjüngt sich die dämmschichtseitige Oberfläche eines Widerhakens 6 bzw. eines Widerhakenelementes 7 zum unteren Ende des Widerhakens 6 bzw. zum unteren Ende des zugeordneten U-Schenkels 5 hin (siehe insbesondere Fig. 5).

Die Widerhaken 6 bzw. die Widerhakenelemente 7 sind zweckmäßigerweise an den seitlichen Oberflächen der U-Schenkel 5 angeschlossen. Diese seitlichen Oberflächen weisen zur Innenseite bzw. zur Außenseite des U. Es liegt im Rahmen der Erfindung, dass jeder U-Schenkel eine vorderseitige Oberfläche und eine rückseitige Oberfläche aufweist, wobei die vorderseitige und die rückseitige Oberfläche quer bzw. senkrecht zu den seitlichen Oberflächen eines U-Schenkels 5 angeordnet sind. Gemäß empfohlener Ausführungsform und im Ausführungsbeispiel ist an dem unteren Ende jedes U-Schenkels 5 sowohl an der vorderseitigen Oberfläche des U-Schenkels 5 als auch an der rückseitigen Oberfläche des U-Schenkels 5 jeweils eine Schneidkante 15 vorgesehen. Die Schneidkante 15 ragt dabei aus der vorderseitigen bzw. aus der rückseitigen Oberfläche des U-Schenkels 5 hervor. Die beiden Schneidkanten 15 eines U-Schenkels 5 liegen dabei zweckmäßigerweise und im Ausführungsbeispiel diametral gegenüber. Sowohl die Schneidkante 15 an der vorderseitigen Oberfläche eines U-Schenkels 5 als auch die Schneidkante 15 an der rückseitigen Oberfläche des U-Schenkels 5 erstreckt sich vom unteren Ende des U-Schenkels 5 nach oben hin. Im Ausführungsbeispiel sind die Schneidkanten 15 an den Widerhaken 6 und die Schneidkanten 15 an der vorderseitigen bzw. an der rückseitigen Oberfläche der U-Schenkel 5 gleich lang bzw. in etwa gleich lang und weisen vorzugsweise auch die gleiche Höhe h auf.

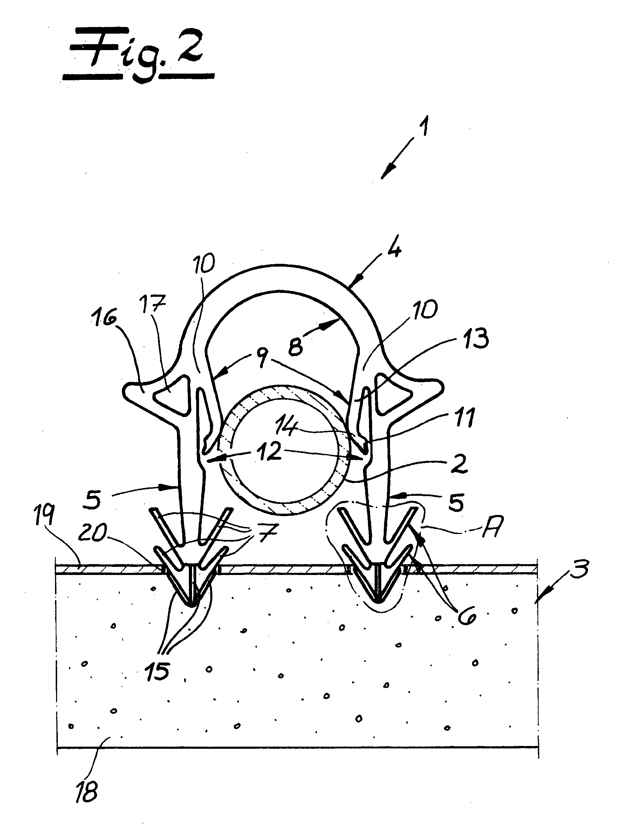

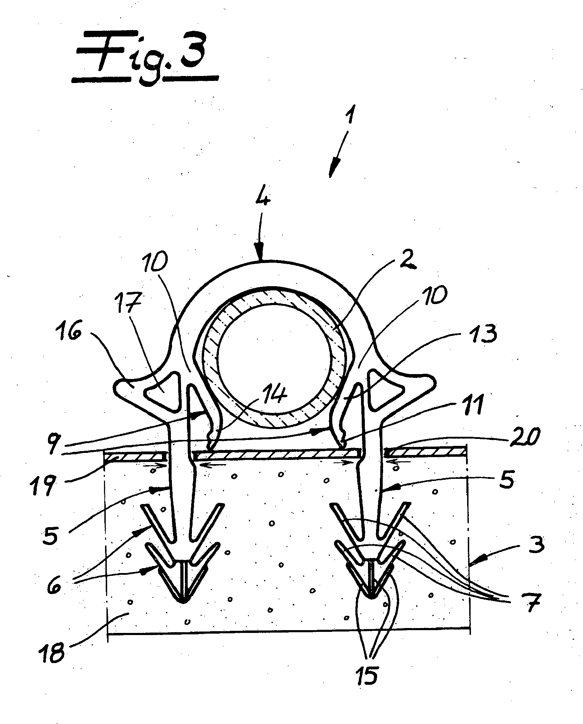

Gegenstand der Erfindung ist auch eine Heiz- und/oder Kühlanordnung mit einer Dämmschicht 3, zumindest einem auf der Dämmschicht 3 verlegten Rohr 2 und mit erfindungsgemäßen Rohrhaltern 1, mit denen das Rohr 2 an der Dämmschicht 3 fixiert wird (siehe insbesondere Fig. 2 und 3). Die erfindungsgemäßen Rohrhalter 1 werden zweckmäßigerweise - das Rohr 2 überfassend - mit einer in den Figuren nicht dargestellten Setzvorrichtung in die Dämmschicht 3 eingestoßen. Die Setzvorrichtung greift dabei bevorzugt an Manipulierelementen 16 des Rohrhalters 1 an, die außenseitig an den U-Schenkeln 5 angeformt sind. Zur Materialersparnis und zur besseren Wanddickenverteilung sind in diesen Manipulierelementen 16 vorzugsweise Ausnehmungen 17 vorgesehen.

Die Dämmschicht 3 der erfindungsgemäßen Heiz- und/oder Kühlanordnung weist eine obere Auflageschicht 19 aus einem elastischen Werkstoff auf. Vorzugsweise und im Ausführungsbeispiel handelt es sich bei dem elastischen Werkstoff um einen elastischen Vliesstoff. Die Dämmschicht 3 weist im Ausführungsbeispiel eine Unterschicht 18 sowie die darauf angeordnete Auflageschicht 19 aus dem elastischen Vliesstoff auf. Beim Einstoßen eines Rohrhalters 1 in die Dämmschicht 3 schneiden die erfindungsgemäßen Schneidkanten 15 präzise relativ kleine Einstichöffnungen 20 in die Auflageschicht 19 bzw. in den elastischen Vliesstoff ein. Wenn die Widerhaken 6 die Auflageschicht 19 passieren, sind die Einstichöffnungen 20 zunächst noch relativ groß (Fig. 2). Wenn die Widerhaken 6 dann weiter in die Dämmschicht 3 bzw. in die Unterschicht 18 eindringen, zieht sich die elastische Auflageschicht 19 aus dem Vliesstoff im Bereich der Einstichöffnungen 20 wieder zusammen, so dass die eingeschnittenen Einstichöffnungen 20 unter Einwirkung elastischer Rückstellkräfte teilweise wieder verschlossen werden. Zweckmäßigerweise liegt die Auflageschicht 19 dann oberhalb der Widerhaken 6 an den U-Schenkeln 5 des Rohrhalters 1 an (Fig. 3). Im befestigten Zustand des Rohrhalters 1 hintergreifen die Widerhaken 6 bzw. die Widerhakenelemente 7 bevorzugt und im Ausführungsbeispiel die Auflageschicht 19 der Dämmschicht 3.

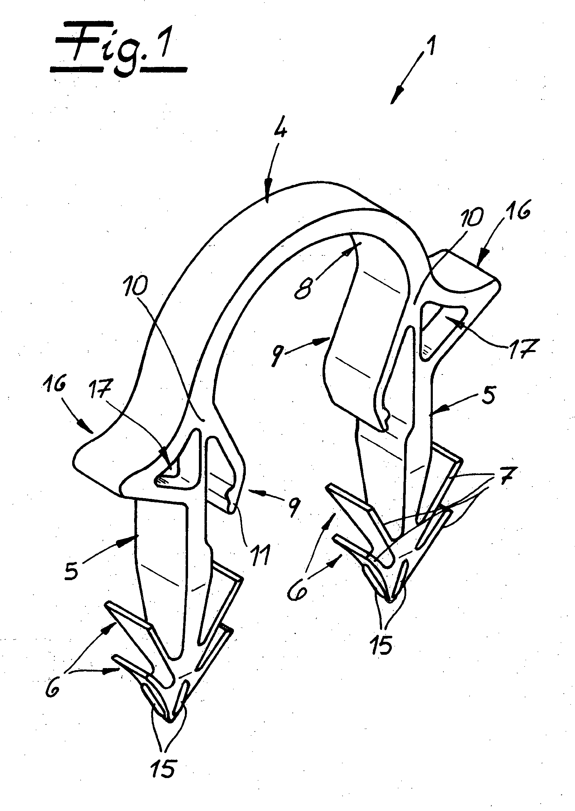

In den Fig. 1 bis 3 ist im Übrigen erkennbar, dass an den Innenseiten 8 der U-Schenkel 5 jeweils ein Rohrauflageelement 9 angeschlossen ist. Die Rohrauflageelemente 9 dienen der Aufnahme bzw. Auflage eines Rohres 2 (Fig. 3). Das Rohr 2 liegt dabei im oberen Bereich der Rohrauflageelemente 9 auf den Rohrauflageelementen 9 auf. Wie der Fig. 3 entnehmbar ist, dienen diese Rohrauflageelemente 9 zugleich als Abstützelemente für die Abstützung des Rohrhalters 1 bzw. des Rohres 2 auf der Dämmschicht 3. Zweckmäßigerweise und im Ausführungsbeispiel stützen sich die Rohrauflageelemente 9 dabei unmittelbar auf der Dämmschicht 3 ab. Vorzugsweise und im Ausführungsbeispiel sind die Rohrauflageelemente 9 im Übrigen einstückig an die U-Schenkel 5 des Rohrhalters 1 angeformt. Bevorzugt und im Ausführungsbeispiel sind die Rohrauflageelemente 9 ausschließlich mit ihrem oberen Ende 10 jeweils an die Innenseite 8 des zugeordneten U-Schenkels 5 angeschlossen.

Insbesondere einer vergleichenden Betrachtung der Fig. 2 und 3 ist entnehmbar, dass die Rohrauflageelemente 9 als Rastelemente zum Einrasten bzw. Verrasten eines Rohres 2 zwischen der U-Basis 4 und den Rohrauflageelementen 9 (Fig. 3) ausgebildet sind. Beim Aufbringen eines erfindungsgemäßen Rohrhalters 1 auf ein Rohr 2 passiert das Rohr 2 zunächst die Rohrauflageelemente 9, die aufgrund ihres gegenüber dem Außendurchmesser des Rohres 2 geringeren Abstandes voneinander zu den Innenseiten 8 der Schenkel 5 hingedrückt werden (Fig. 2). Dazu sind an den Innenseiten 8 der U-Schenkel 5 Ausweichausnehmungen 12 für die Rohrauflageelemente 9 vorgesehen. Nach dem Passieren des Rohres 2 gelangen die federbeweglichen Rohrauflageelemente 9 unter Einwirkung elastischer Rückstellkräfte in ihren Ausgangszustand (Fig. 3) zurück. Die Rohrauflageelemente 9 stützen sich dann im fixierten Zustand des Rohrhalters 1 bzw. des Rohres 2 auf der Dämmschicht 3 ab. Den Figuren ist entnehmbar, dass die Rohrauflageelemente 9 einen oberen Rohrauflageabschnitt 13 und einen dazu zur Innenseite der U-Schenkel 5 abgewinkelten Abstützabschnitt 14 aufweisen. Im fixierten Zustand liegt das Rohr 2 auf den Rohrauflageabschnitten 13 auf (Fig. 3) und die dazu jeweils abgewinkelten Abstützabschnitte 14 stützen sich jeweils mit einem Abstützfuß 11 auf der Dämmschicht 3 ab.

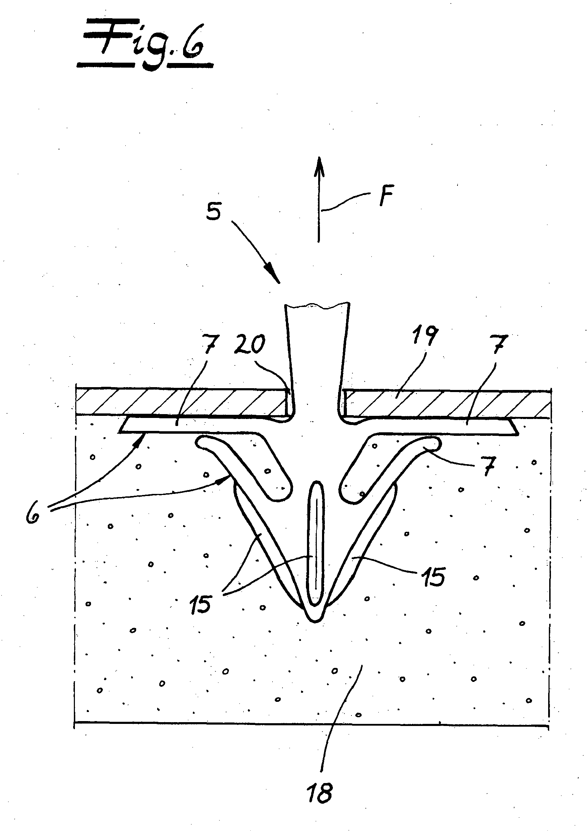

Fig. 6 zeigt den unteren Bereich eines U-Schenkels 5 bei Beaufschlagung des Rohrhalters 1 mit einer Auszugskraft F. Bei einem solchen Auszugsversuch hinterfassen die Widerhakenelemente 7 des oberen Widerhakens die Auflageschicht 19. Diese Widerhakenelemente 7 des oberen Widerhakens 6 legen sich gleichsam an die Auflageschicht 19 an. Sie werden dabei von den Widerhakenelementen 7 des unteren Widerhakens 6 abgestützt. Durch die stabilisierende Wirkung der Schneidkanten 15 wird eine sehr effektive und stabile Abstützung erreicht, so dass das Ausziehen des Rohrhalters 1 deutlich erschwert wird.

## Patentansprüche

1. Rohrhalter (1) zur Befestigung eines Heizrohres und/oder Kühlrohres (2) auf einer Dämmschicht (3), wobei der Rohrhalter (1) U-förmig bzw. im Wesentlichen U-förmig ausgebildet ist und eine U-Basis (4) sowie zwei daran angeschlossene U-Schenkel (5) aufweist, wobei an jedem U-Schenkel (5) zumindest ein Widerhaken (6) für die Verankerung des Rohrhalters (1) in der Dämmschicht (3) angeschlossen ist, **dadurch gekennzeichnet, dass** aus der dämmschichtseitigen Oberfläche des an jedem U-Schenkel (5) angeschlossenen unteren Widerhakens (6) zumindest eine Schneidkante (15) vorkragt und dass sich die Schneidkante (15) vom unteren Ende des Widerhakens (6) bzw. vom unteren Ende des zugeordneten U-Schenkels (5) über ein Widerhakenelement (7) des Widerhakens (6) nach oben hin erstreckt.

2. Rohrhalter nach Anspruch 1, **dadurch gekennzeichnet, dass** zumindest die an den U-Schenkeln (5) angeschlossenen unteren Widerhaken (6) V-förmig ausgebildet sind und dass ein den einen V-Schenkel bildendes Widerhakenelement (7) auf der einen Seite des zugeordneten U-Schenkels (5) und ein den anderen V-Schenkel bildendes Widerhakenelement (7) auf der anderen Seite des zugeordneten U-Schenkels (5) angeordnet ist.

3. Rohrhalter nach Anspruch 2, **dadurch gekennzeichnet, dass** der Winkel α zwischen den Widerhakenelementen (7) eines Widerhakens (6) 40° bis 80° und bevorzugt 50° bis 70° beträgt.

4. Rohrhalter nach einem der Ansprüche 1 bis 3, **dadurch gekennzeichnet, dass** an jedem Widerhakenelement (7) der an den U-Schenkeln (5) angeschlossenen unteren Widerhaken (6) zumindest eine, vorzugsweise lediglich eine Schneidkante (15) angeordnet bzw. angeschlossen ist.

5. Rohrhalter nach einem der Ansprüche 1 bis 4, **dadurch gekennzeichnet, dass** eine Schneidkante (15) zumindest im in Bezug auf die Länge I eines Wider-hakenelementes (7) unteren Drittel, bevorzugt in der unteren Hälfte des Widerhakenelementes (7), angeordnet ist.

6. Rohrhalter nach einem der Ansprüche 1 bis 5, **dadurch gekennzeichnet, dass** eine Schneidkante (15) mittig bzw. zentralmittig auf der dämmschichtseitigen Oberfläche eines Widerhakenelementes (7) angeordnet ist.

7. Rohrhalter nach einem der Ansprüche 1 bis 6, **dadurch gekennzeichnet, dass** eine Schneidkante (15) mit einer Höhe h aus der zugeordneten dämmschichtseitigen Oberfläche des Widerhakens (6) bzw. des Widerhakenelementes (7) vorkragt und dass die Höhe h 0,2 mm bis 1,4 mm, bevorzugt 0,2 mm bis 1,2 mm und sehr bevorzugt 0,3 mm bis 1 mm beträgt.

8. Rohrhalter nach einem der Ansprüche 1 bis 7, **dadurch gekennzeichnet, dass** sich die dämmschichtseitige Oberfläche eines Widerhakens (6) bzw. eines Widerhakenelementes (7) zum unteren Ende des Widerhakens (6) bzw. zum unteren Ende des zugeordneten U-Schenkels (5) hin verjüngt.

9. Rohrhalter nach einem der Ansprüche 1 bis 8, **dadurch gekennzeichnet, dass** an dem unteren Ende eines U-Schenkels (5) aus der vorderseitigen Oberfläche des U-Schenkels (5) und/oder aus der rückseitigen Oberfläche des U-Schenkels (5) zumindest eine Schneidkante (15) vorkragt.

10. Rohrhalter nach Anspruch 9, **dadurch gekennzeichnet, dass** sich die zumindest eine Schneidkante (15) an der vorderseitigen Oberfläche des U-Schenkels (5) und/oder die zumindest eine Schneidkante (15) an der rückseitigen Oberfläche des U-Schenkels (5) vom unteren Ende des U-Schenkels (5) nach oben hin erstreckt.

11. Heiz- und/oder Kühlanordnung mit einer Dämmschicht (3), zumindest einem auf der Dämmschicht (3) verlegten Rohr (2) und mit Rohrhaltern (1) nach einem der Ansprüche 1 bis 10, mit denen das Rohr (2) an der Dämmschicht (3) fixiert ist, **dadurch gekennzeichnet, dass** die Dämmschicht (3) eine Auflageschicht (19) aus einem elastischen Werkstoff, insbesondere aus einem elastischen Vliesstoff aufweist.

12. Heiz- und/oder Kühlanordnung nach Anspruch 11, **dadurch gekennzeichnet, dass** die Auflageschicht (19) mit der Maßgabe elastisch ausgebildet ist, dass sich die elastische Auflageschicht (19) nach dem Eindringen der Widerhaken (6) in die Dämmschicht (3) im Bereich der mit den Widerhaken (6) erzeugten Einstichöffnungen (20) zusammenzieht, so dass die Einstichöffnungen (20) teilweise bzw. bereichsweise wieder verschlossen werden.

13. Heiz- und/oder Kühlanordnung nach einem der Ansprüche 11 oder 12, **dadurch gekennzeichnet, dass** die elastische Auflageschicht (19) mit einer Polymerschicht und/oder mit einer Lackschicht versiegelt ist.

## Claims

1. A pipe holder (1) for attaching a heating pipe and/or cooling pipe (2) on an insulating layer (3), wherein the pipe holder (1) is U-shaped or essentially U-shaped in design, and exhibits a U-base (4) along with two U-legs (5) connected thereto, wherein at least one barbed hook (6) is connected to each U-leg (5) for anchoring the pipe holder (1) in the insulating layer (3), **characterized in that** at least one cutting edge (15) projects out of the insulating layer-side surface of the lower barbed hook (6) connected to each U-leg (5), and that the cutting edge (15) extends upwardly from the lower end of the barbed hook (6) or from the lower end of the allocated U-leg (5) by way of a barbed hook element (7).

2. The pipe holder according to claim 1, **characterized in that** at least the lower barbed hook (6) connected to the U-legs (5) is V-shaped in design, and that a barbed hook element (7) forming the one V-leg is arranged on the one side of the allocated U-leg (5), and a barbed hook element (7) forming the other V-leg is arranged on the other side of the allocated U-leg (5).

3. The pipe holder according to claim 2, **characterized in that** the angle α between the barbed hook elements (7) of a barbed hook (6) measures 40° to 80°, and preferably 50° to 70°.

4. The pipe holder according to one of claims 1 to 3, **characterized in that** at least one, preferably only one, cutting edge (15) is arranged on or connected to each barbed hook element (7) of the lower barbed hook (6) connected to the U-legs (5).

5. The pipe holder according to one of claims 1 to 4, **characterized in that** a cutting edge (15) is arranged in the lower third, preferably in the lower half, of the barbed hook element (7) relative to the length I of a barbed hook element (7).

6. The pipe holder according to one of claims 1 to 5, **characterized in that** one cutting edge (15) is concentrically or centrally arranged on the insulating layer-side surface of a barbed hook element (7).

7. The pipe holder according to one of claims 1 to 6, **characterized in that** a cutting edge (15) with height h projects out of the allocated insulating layer-side surface of the barbed hook (6) or barbed hook element (7), and that the height h measures 0.2 mm to 1.4 mm, preferably 0.2 mm to 1.2 mm, and very preferably 0.3 mm to 1 mm.

8. The pipe holder according to one of claims 1 to 7, **characterized in that** the insulating layer-side surface of a barbed hook (6) or a barbed hook element (7) tapers toward the lower end of the barbed hook (6) or toward the lower end of the allocated U-leg (5).

9. The pipe holder according to one of claims 1 to 8, **characterized in that** at least one cutting edge (15) projects out of the front surface of the U-leg (5) and/or out of the rear surface of the U-leg (5) at the lower end of a U-leg (5).

10. The pipe holder according to claim 9, **characterized in that** the at least one cutting edge (15) on the front surface of the U-leg (5) and/or the at least one cutting edge (15) on the rear surface of the U-leg (5) extends upwardly from the lower end of the U-leg (5).

11. A heating and/or cooling device with an insulating layer (3), at least one pipe (2) laid on the insulating layer (3), and with pipe holders (1) according to one of claims 1 to 10, with which the pipe (2) is fixed on the insulating layer (3), **characterized in that** the insulating layer (3) exhibits an overlay (19) comprised of an elastic material, in particular of an elastic nonwoven fabric.

12. The heating and/or cooling device according to claim 11, **characterized in that** the overlay (19) is elastically designed with the provision that the elastic overlay (19) contracts after the barbed hook (6) has penetrated into the insulating layer (3) in the area of the pierced holes (20) generated with the barbed hook (6), so that the pierced holes (20) are partially or regionally sealed again.

13. The heating and/or cooling device according to one of claims 11 or 12, **characterized in that** the elastic overlay (19) is sealed with a polymer layer and/or a lacquer layer.

## Revendications

1. Support de tube (1) pour la fixation d'un tube de chauffage et/ou d'un tube de refroidissement (2) sur une couche isolante (3), le support de tube (1) étant conçu en forme de U ou essentiellement en forme de U et comprenant une base de U (4) et deux branches de U (5) raccordées à celle-ci, dans lequel au moins un ardillon (6) est relié à chaque branche de U (5) pour l'ancrage du support de tube (1) dans la couche isolante (3), **caractérisé en ce qu'**au moins un bord tranchant (15) fait saillie à partir de la surface côté couche isolante de l'ardillon (6) inférieur relié à chaque branche de U (5), et **en ce que** le bord tranchant (15) s'étend vers le haut à partir de l'extrémité inférieure de l'ardillon (6) ou de l'extrémité inférieure de la branche de U (5) correspondante, en passant par un élément d'ardillon (7) de l'ardillon (6).

2. Support de tube selon la revendication 1, **caractérisé en ce qu'**au moins les ardillons inférieurs (6) reliés aux branches de U (5) sont conçus en forme de V, et **en ce qu'**un élément d'ardillon (7) formant l'une des branches de V est agencé d'un côté de la branche de U (5) correspondante et un élément d'ardillon (7) formant l'autre branche de V est agencé de l'autre côté de la branche de U (5) correspondante.

3. Support de tube selon la revendication 2, **caractérisé en ce que** l'angle α entre les éléments d'ardillon (7) d'un ardillon (6) mesure entre 40° et 80° et de préférence entre 50° et 70°.

4. Support de tube selon l'une des revendications 1 à 3, **caractérisé en ce qu'**au moins un, de préférence un seul bord tranchant (15) est agencé sur ou relié à chaque élément d'ardillon (7) des ardillons inférieurs (6) reliés aux branches de U (5).

5. Support de tube selon l'une des revendications 1 à 4, **caractérisé en ce qu'**un bord tranchant (15) est agencé au moins dans le tiers inférieur par rapport à la longueur l d'un élément d'ardillon (7), de préférence dans la moitié inférieure de l'élément d'ardillon (7).

6. Support de tube selon l'une des revendications 1 à 5, **caractérisé en ce qu'**un bord tranchant (15) est agencé au milieu ou au centre de la surface côté couche isolante d'un élément d'ardillon (7).

7. Support de tube selon l'une des revendications 1 à 6, **caractérisé en ce qu'**un bord tranchant (15) d'une hauteur h fait saillie à partir de la surface correspondante de l'ardillon (6) ou de l'élément d'ardillon (7), du côté couche isolante, et **en ce que** la hauteur mesure entre 0,2 mm et 1,4 mm, de préférence entre 0,2 mm et 1,2 mm, et de façon particulièrement préférée entre 0,3 mm et 1 mm.

8. Support de tube selon l'une des revendications 1 à 7, **caractérisé en ce que** la surface côté couche isolante d'un ardillon (6) ou d'un élément d'ardillon (7) s'affine vers l'extrémité inférieure de l'ardillon (6) ou vers l'extrémité inférieure de la branche de U (5) correspondante.

9. Support de tube selon l'une des revendications 1 à 8, **caractérisé en ce qu'**à l'extrémité inférieure d'une branche de U (5), au moins un bord tranchant (15) fait saillie à partir de la surface avant de la branche de U (5) et/ou à partir de la surface arrière de la branche de U (5).

10. Support de tube selon la revendication 9, **caractérisé en ce que** l'au moins un bord tranchant (15) sur la surface avant de la branche de U (5) et/ou l'au moins un bord tranchant (15) sur la surface arrière de la branche de U (5) s'étend/s'étendent vers le haut à partir de l'extrémité inférieure de la branche de U (5).

11. Système de chauffage et/ou de refroidissement avec une couche isolante (3), au moins un tube (2) posé sur la couche isolante (3), et avec des supports de tube (1) selon l'une des revendications 1 à 10, avec lesquels le tube (2) est fixé sur la couche isolante (3), **caractérisé en ce que** la couche isolante (3) comprend une couche d'appui (19) constituée d'une matière élastique, en particulier d'un non-tissé élastique.

12. Système de chauffage et/ou de refroidissement selon la revendication 11, **caractérisé en ce que** la couche d'appui (19) est conçue élastique sous réserve que la couche d'appui élastique (19) se contracte dans la région des ouvertures d'entaille (20) produites par les ardillons (6), après l'introduction des ardillons (6) dans la couche isolante (3), de manière à refermer partiellement ou par endroits les ouvertures d'entaille (20).

13. Système de chauffage et/ou de refroidissement selon l'une des revendications 11 ou 12, **caractérisé en ce que** la couche d'appui élastique (19) est scellée avec une couche de polymère et/ou avec une couche de peinture.
